# EUROPÄISCHE PATENTSCHRIFT

(11) **EP 3 553 483 B1**
(45) Veröffentlichungstag und Bekanntmachung des Hinweises auf die Patenterteilung: **09.02.2022**
(21) Anmeldenummer: 19163593.7
(22) Anmeldetag: 19.03.2019
(51) Int. Cl.: G01L 1/22, A01B 63/00, B60D 1/00, B60T 1/00, G01L 5/13, G01L 5/16, G01L 1/16, B60T 7/20, B60T 8/17, B60T 13/08, B60T 13/66, B60T 8/00

(54) **MESSEINRICHTUNG ZUM MESSEN VON KRÄFTEN UND/ODER MOMENTEN ZWISCHEN EINEM MOTORISIERTEN FAHRZEUG UND EINEM DAVON GEZOGENEN ODER GESCHOBENEN ANHÄNGER ODER ANBAUGERÄT**
MEASURING DEVICE FOR MEASURING FORCE AND / OR MOMENTS BETWEEN A MOTORIZED VEHICLE AND A PULLED OR PUSHED TRAILER
DISPOSITIF DE MESURE PERMETTANT DE MESURER LA FORCE ET / OU LES MOMENTS ENTRE UN VÉHICULE MOTORISÉ ET UNE REMORQUE TIRÉE OU POUSSÉE

(30) Priorität: 22.03.2018 DE 102018106856
(43) Veröffentlichungstag der Anmeldung: 16.10.2019
(73) Patentinhaber: ZF CV Systems Hannover GmbH, 30453 Hannover (DE)
(72) Erfinder: BÜHRKE, Johannes, 38102 Braunschweig (DE); FRERICHS, Ludger, 48336 Sassenberg (DE); BRÜTT, Mirko, 30952 Ronnenberg (DE); HANKE, Steffen, 30419 Hannover (DE); KEMPER, Sebastian, 38118 Braunschweig (DE); THIELKE, Lars, 29308 Winsen/Aller (DE); ZIELKE, Frank, 30890 Barsinghausen (DE)
(74) Vertreter: Copi, Joachim

(56) Entgegenhaltungen:
- EP-A1- 0 575 634
- EP-A2- 2 251 661
- EP-A2- 2 280 263
- US-A- 4 573 362
- US-A1- 2009 032 273
- US-A1- 2018 001 720

## Beschreibung

Die Erfindung betrifft eine Messeinrichtung zum Messen von Kräften und/oder Momenten zwischen einem motorisierten Fahrzeug und einem davon gezogenen oder geschobenen Anhänger oder Anbaugerät.

Aus der EP 2 280 263 A2, US 2009/032273 A1 und der US 2018/001720 A1 sind Vorrichtungen zur Bestimmung einer Anhängerlast bekannt.

Aus der EP 2 893 793 B1 ist ein Zugkraftmesssystem bekannt, welches in einem Anhängebock an einem Traktor integriert ist. Der Anhängebock ist dazu ausgelegt, an einem Heckrahmen eines Ackerschleppers befestigt zu werden und weist linke und rechte Zugverbindungsstützen auf, wobei die linken und rechten Zugverbindungsstützen jeweils eine entsprechende linke und rechte Zugverbindung mit einer entsprechenden linken und rechten Seite des Anhängebocks koppeln. Es werden nur horizontale Zugkräfte, die von den linken und rechten Zugverbindungen auf die linken und rechten Zugverbindungsstützen ausgeübt werden, mechanisch summiert. Ein in einem Gehäuse, geschützt zwischen den Zugverbindungen angeordneter Zugkraft-Messwandler generiert daraus ein eindimensionales Zugkraftsignal. Der Anhängebock ist kompliziert aufgebaut, und der Zugkraft-Messwandler lässt sich nur mit diesem Anhängebock verwenden. Das Zugkraftmesssystem ist nicht dazu geeignet, Kräfte und/oder Momente zwischen einem motorisierten Fahrzeug und einem davon gezogenen oder geschobenen Anhänger oder Anbaugerät nach Größe und Richtung zu generieren und gegebenenfalls anzuzeigen.

Vor diesem Hintergrund lag der Erfindung die Aufgabe zugrunde, Koppelkräfte und Koppeldrehmomente am Kupplungspunkt zwischen einem motorisierten Fahrzeug, insbesondere einem Traktor, und einem Anhänger oder Anbaugerät während des Fahrens in drei Dimensionen zu messen, ohne dass dafür besondere Einrichtungen am Anhänger oder Anbaugerät vorgesehen werden müssen.

Gelöst wird diese Aufgabe durch eine Messeinrichtung, welche die Merkmale des Anspruchs 1 oder 2 aufweist. Vorteilhafte Weiterbildungen sind in den abhängigen Ansprüchen genannt.

Demnach betrifft die Erfindung eine Messeinrichtung zum Messen von Kräften und/oder Momenten zwischen einem motorisierten Fahrzeug und einem davon gezogenen oder geschobenen Anhänger oder Anbaugerät.

Erfindungsgemäß ist vorgesehen, dass die Messeinrichtung wenigstens drei an einem Träger quer zu einer gedachten Längsachse des motorisierten Fahrzeugs sowie zueinander beabstandet angeordnete Sensorelemente aufweist, wobei die Messeinrichtung in einem Kupplungsbereich zwischen dem motorisierten Fahrzeug und dem gezogenen oder geschobenen Anhänger oder Anbaugerät angeordnet ist, und wobei die Sensorelemente zur Übertragung derer Messwerte mit einem Auswertegerät verbunden sind, welches dazu eingerichtet ist, diese Messwerte in Signale für Kraftanzeigen und/oder Momentenanzeigen nach Größe und Richtung umzuwandeln.

Diese Messeinrichtung befindet sich grundsätzlich im Bereich des motorisierten Fahrzeugs, so dass an einem Anhänger oder Anbaugerät oder deren Kupplungsvorrichtungen keine Veränderungen vorgenommen zu werden brauchen. Aufgrund der in allen drei Raumkoordinaten ermittelbaren Messwerte in Form von Kräften und/oder Momenten nach Betrag und Richtung ist es in Weiterbildung der Erfindung vorgesehen, das erwähnte Auswertegerät in Datenverbindung mit einem Fahrzeugzustand-Managementsystem zu bringen, das dazu eingerichtet ist, aus den Messwerten der Sensorelemente instabile Fahrsituationen zu erkennen und Gegensteuermaßnahmen einzuleiten. Das Fahrzeugzustand-Managementsystem ist hierzu vorzugsweise als ein Mikrocomputer ausgebildet, welcher zur Durchführung von Gegensteuermaßnahmen mit einer geeigneten Software ausgestattet ist sowie mit geeigneten Aktuatoren und/oder elektromagnetischen Steuerventilen zur Betätigung derselben verbunden ist.

Des Weiteren ist das Fahrzeugzustand-Managementsystem in Weiterbildung der Erfindung so eingerichtet, dass es in der Lage ist, aus den Messwerten der Sensorelemente Steuersignale für Aktuatoren zur Bewirkung einer Abstimmung der Bremswirkung des motorisierten Fahrzeugs und des Anhängers oder des Anhängegeräts aufeinander zu erzeugen.

Gemäß der ersten Ausführung der Erfindung ist vorgesehen, dass die Messeinrichtung als Modulpaket an einem Standard-Anhängebock am motorisierten Fahrzeug montierbar ist sowie mittels eines am Standard-Anhängebock angeordneten Kupplungsträgers mit einer Standard-Anhängevorrichtung, wie etwa eine Standard-Maulkupplung oder eine Standard-Kugelkopfkupplung, verschraubt ist.

Gemäß der zweiten Ausführung der Erfindung ist vorgesehen, dass die Messeinrichtung als Modulpaket zwischen einer Anschraubaufnahme am motorisierten Fahrzeug für einen Standard-Anhängebock und diesem Standard-Anhängebock montiert ist, und dass eine Standard-Anhängevorrichtung, wie etwa eine Standard-Maulkupplung oder eine Standard-Kugelkopfkupplung, direkt am Standard-Anhängebock befestigt ist.

Vorzugsweise ist diese Standard-Anhängevorrichtung am Standard-Anhängebock lösbar und höhenverstellbar befestigt.

Besonders vorteilhaft ist es, wenn auch der Kupplungsträger am Standard-Anhängebock lösbar und höhenverstellbar befestigt ist.

Gemäß einer ersten vorteilhaften Ausführungsform der Messeinrichtung kann vorgesehen sein, dass vier Sensorelemente in Form von Wägezellen, Dehnungsmessstreifen oder SAW-Elementen (Surface-Acoustic-Wave-Elemente) als Kraftsensoren an dem messplattenförmigen Träger beabstandet im Quadrat oder im Rechteck angeordnet sind, dass die vier Sensorelemente einerseits über den messplattenförmigen Träger an einer Anschraubaufnahme in Form einer Befestigungsplatte am motorisierten Fahrzeug befestigt sind und andererseits mit dem Standard-Anhängebock in Wirkverbindung sind, um die durch eine Beanspruchung des Standard-Anhängebocks durch die Last des gezogenen oder geschobenen Anhängers oder des Anbaugeräts für das Auswertegerät bestimmte Signale zu generieren.

Durch die Wirkverbindung zwischen dem Standard-Anhängebock und der Messplatte werden die vier Sensorelemente durch die Last des gezogenen oder geschobenen Anhängers oder des Anbaugeräts abhängig von Größe und Richtung der Beanspruchungen des Standard-Anhängebocks verformt. Aus den Signalen der Sensorelemente lassen sich mittels bekannter Algorithmen die Kräften Fx, Fy, Fz in X-, Y- und Z-Richtung eines rechtwinkeligen Koordinatensystems berechnen, ebenso wie die auftretenden Momente Mx, My und MZ. Diese Kräfte und Momente sind abhängig von der Höhe der Standard-Anhängevorrichtung über dem Niveau des Erdbodens und von einem Winkel a, den eine Deichsel eines Anhängers oder eines Anbaugeräts in einer waagerechten Querebene gegenüber dem motorisierten Fahrzeug einnimmt, und ebenso von einem Winkel ß, den die Deichsel des Anhängers oder des Anbaugeräts gegenüber der waagerechten Querebene des motorisierten Fahrzeugs vertikal nach oben oder unten einnimmt.

Gemäß einer zweiten vorteilhaften Ausführungsform der erfindungsgemäßen Messeinrichtung ist vorgesehen, dass vier Sensorelemente in Form von Wägezellen, Dehnungsmessstreifen oder SAW-Elementen als Kraftsensoren an vier um etwa 90° gegeneinander versetzten, sich radial von einer zentralen, zylindrischen Nabe erstreckenden Speichen angeordnet sind, dass die Speichen kraft-, form- oder stoffschlüssig mit einem Träger in Form einer Messplatte gekoppelt sind, wobei dieser Träger in Form einer Messplatte zusammen mit einer Adapterplatte, mit welcher die zentrale, zylindrische Nabe form- oder stoffschlüssig gekoppelt ist, zwischen einer Anschraubplatte einer Standard-Anhängekupplung und einem Standard-Kupplungsträger eingespannt ist.

Hierbei kann eine Vorspannung auf die Speichen über den axial vorstehenden Bereich der zylindrischen Nabe mittels zwischen der Anschraubplatte einer Standard-Anhängekupplung und dem Standard-Kupplungsträger angeordneten Dehnschrauben aufgebracht werden. Hierzu ist vorgesehen, dass in dem Träger in Form einer Messplatte eine dem Standard-Kupplungsträger zugewandte, die Speichen frei gebende und deren Verformung beim Aufbringen der Vorspannung mittels der Dehnschrauben ermöglichende Ausnehmung ausgebildet ist.

Auch in diesem Fall kann die Messeinrichtung als Modulpaket ausgebildet sein, welche aus der Anschraubplatte der Standard-Anhängevorrichtung, der Adapterplatte, dem Träger in Form einer Messplatte und dem Standard-Kupplungsträger besteht, und welche mittels Dehnschrauben gegeneinander verspannt sind. Dieses Modulpaket ist an einem am motorisierten Fahrzeug befestigten Standard-Anhängebock bevorzugt höhenverstellbar anbringbar ausgebildet.

Es ist ersichtlich, dass an einem Standard-Anhängebock unterschiedliche Standard-Anhängevorrichtungen angebracht werden können, die sich durch das geschilderte vertikale Führungssystem am Anhängebock in ihrer Höhe einstellen lassen.

Die Übertragung der Signale der Sensorelemente zum motorisierten Fahrzeug kann über eine Kabelverbindung oder drahtlos, beispielsweise mittels W-LAN, erfolgen.

Aufgrund des Aufbaus der erfindungsgemäßen Messeinrichtung lässt sich diese sowohl an landwirtschaftlichen Fahrzeugen, insbesondere Ackerschlepper, als auch an Straßenfahrzeugen verwenden. Die verschiedenen Standard-Anhängevorrichtungen lassen sich modular austauschen, ohne dass an der Messeinrichtung etwas zu ändern wäre. Mit der erfindungsgemäßen Messeinrichtung lassen sich auch die Massen des motorisierten Fahrzeugs und des Anhängers oder Anbaugeräts bestimmen, wodurch sich die Bremswirkungen von motorisierten Fahrzeugen und Anhänger oder Anbaugeräten verbessert abstimmen lassen.

Die Erfindung wird nachstehend anhand mehrerer, in der beigefügten Zeichnung dargestellter Ausführungsbeispiele weiter erläutert. In der Zeichnung zeigt
Fig. 1 eine vereinfachte, auseinander gezogene Darstellung der Bauteile einer Messeinrichtung zum Messen von Kräften und/oder Momenten zwischen einem motorisierten Fahrzeug und einem davon gezogenen oder geschobenen Anhänger oder Anbaugerät, wovon
Fig. 1A eine teilweise Ansicht eines motorisierten Fahrzeugs in Form eines Traktors mit einer schematischen Seitenansicht der Messeinrichtung gemäß Fig. 1 zeigt,
Fig. 1B eine auseinander gezogene isometrische Darstellung der Messeinrichtung gemäß Fig. 1A zeigt,
Fig. 1C eine isometrische Darstellung eines kastenförmigen Standard-Anhängebocks für einen Traktor zeigt,
Fig. 1D eine schematische isometrische Darstellung einer Standard-Anhängevorrichtung in Form einer Maulkupplung zeigt, und bei der
Fig. 2 eine vereinfachte, auseinander gezogene isometrische Darstellung der Bauelemente einer erfindungsgemäßen Messeinrichtung gemäß einer zweiten Ausführungsform zeigt, wovon,
Fig. 2A eine isometrische Darstellung eines kastenförmigen Standard-Anhängebocks für einen Traktor zeigt,
Fig. 2B eine isometrische Darstellung eines Standard-Kupplungsträgers mit Verriegelungsmitteln zeigt,
Fig. 2C eine isometrische Darstellung einer Messeinrichtung an einem Träger in Form einer Messplatte mit einer Speichenradgeometrie gemäß Fig. 2 zeigt,
Fig. 2D eine isometrische Darstellung einer Adapterplatte zeigt,
Fig. 2E eine isometrische Darstellung einer Standard-Maulkupplung mit Standard-Anschraubplatte zeigt,
Fig. 2F eine dazu alternative isometrische Darstellung einer Standard-Kugelkopfkupplung mit Anschraubplatte zeigt,
Fig. 2G eine Schnittansicht der Messeinrichtung gemäß Fig. 2A mit den Elementen gemäß den Figuren 2B bis 2E zeigt, und bei der
Fig. 3 eine isometrische Darstellung einer bevorzugten Ausführungsform der erfindungsgemäßen Messeinrichtung mit einem Messkreuz gemäß Fig. 4 zeigt,
Fig. 4 eine isometrische Darstellung eines mit einer Basisplatte zu verspannenden Messkreuzes gemäß Fig. 3 zeigt,
Fig. 5 eine isometrische Rückansicht der Basisplatte gemäß Fig. 4 zeigt,
Fig. 6 eine Schnittansicht der zusammengebauten Messeinrichtung gemäß den Figuren 3 bis 5 zeigt, und
Fig. 7 ein rechtwinkliges, dreidimensionales Koordinatenkreuz mit eingezeichneten Kräften Fx, Fy, Fz und Momenten Mx, My, Mz zeigt.

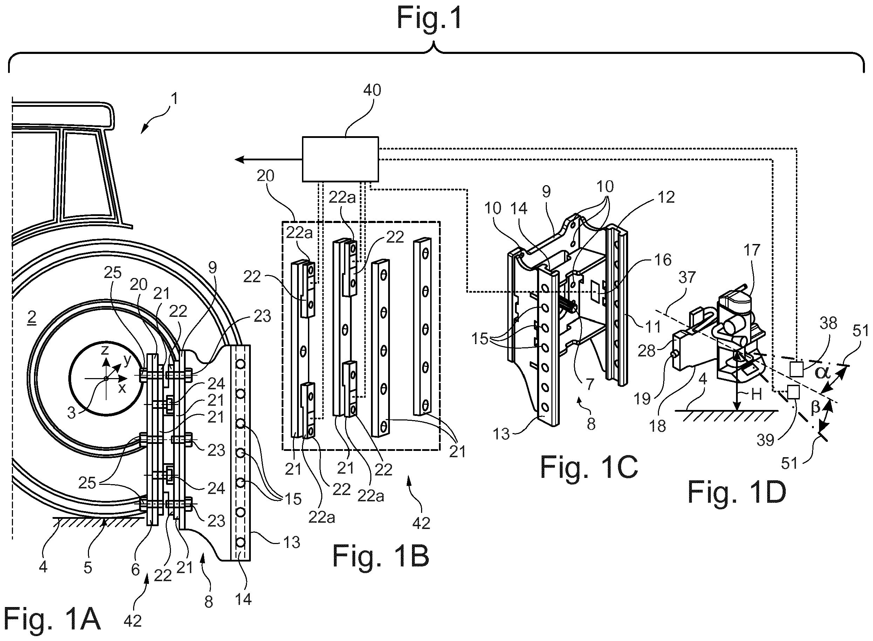

Demnach zeigt Fig. 1 eine vereinfachte, auseinander gezogene Darstellung der Bauteile einer Messeinrichtung 42 zum Messen von Kräften und/oder Momenten zwischen einem motorisierten Fahrzeug und einem davon gezogenen oder geschobenen, nicht erkennbaren Anhänger oder Anbaugerät. Im Detail zeigt Fig. 1A eine Teilansicht eines motorisierten Zugfahrzeugs in Form eines Traktors 1, an dessen Heck ein kastenförmiger Standard-Anhängebock 8 angeschraubt ist, wie später noch erläutert wird.

Fig. 1B zeigt schematisch eine erste Messeinrichtung 42, deren Träger 20 für Sensorelemente 22 in Form einer Messplatte ausgebildet ist und mittels Befestigungsschrauben 25 an einer Anschraubaufnahme 6 in Form einer Befestigungsplatte am Traktor 1 verschraubt ist. An dem als Messplatte ausgebildeten Träger 20 sind insgesamt vier Sensorelemente 22 mittels versenkter Befestigungsschrauben 24 über zwischengelagerte Befestigungsschienen 21 festschraubt.

Die Sensorelemente 22 weisen frei stehende Zungen 22a auf, die über ein weiteres Paar Befestigungsschienen 21 mittels Befestigungsschrauben 23 an dem Standard-Anhängebock 8 festschraubt sind. An den frei stehenden Zungen 22a sind die Sensorelemente 22 angebracht, die drahtlos oder über dargestellte Leitungsverbindungen mit einem Auswertegerät 40 verbunden sind. Das Auswertegerät 40 ist zumindest als eine elektronische Schaltung jedoch vorzugsweise als Mikrocomputer ausgebildet. Es kann an dem als Messplatte ausgebildeten Träger 20 oder am Traktor 1 angeordnet sein.

In einer Raddrehachse 3 des Hinterrades 2 des Traktors 1 ist der Nullpunkt eines rechtwinkligen, dreiachsigen Koordinatensystems mit Koordinatenachsen X, Y, Z eingezeichnet, wobei die Z -Achse durch einen Radaufstandspunkt 5 des Hinterrades 2 auf dem Niveau des Erdbodens 4 verläuft.

Der in Fig. 1A in einer schematischen Seitenansicht dargestellte Standard-Anhängebock 8 ist am Traktor 1 mittels einer Traktorbefestigungsplatte 9 an der Anschraubaufnahme 6 befestigt, zwischen denen die erwähnte Messeinrichtung 42 befestigt ist. Die Sensorelemente 22 dienen der Kräftemessung und können als Wägezellen, Dehnungsmessstreifen oder SAW-Elemente (Surface-Acoustic-Wave-Elemente) ausgebildet sein.

Der in Fig. 1C dargestellte kastenförmige Standard-Anhängebock 8 weist die bereits erwähnte Traktorbefestigungsplatte 9 sowie das gleiche Bohrungsschema 10 auf wie die dazu komplementäre Befestigungsplatte 6 am Traktor 1. An Seitenwänden des Standard-Anhängebocks 8 sind parallel zueinander eine erste Rastschiene 11 mit einer ersten Rastnut 12 und eine zweite Rastschiene 13 mit einer zweiten Rastnut 14 angebracht, deren Rastnuten 12, 14 zueinander weisend geöffnet sind. Entlang der beiden Rastnuten 12, 14 sind Bohrungen 15 für Verriegelungsmittel 19 in Form von Rastzapfen ausgebildet, in die beispielsweise die Rastzapfen 19 an einer Rastplatte 18 einer Standard-Maulkupplung 17 eingreifen und diese in einer Höhe H vom Niveau des Erdbodens 4 fixieren. An einer Seitenwand des Standard-Anhängebocks 8 ist ein Sensor 16 zum Erkennen der Höhe H der Standard-Kupplung 17 angeordnet.

Des Weiteren ist gemäß Fig. 1D ein Sensorelement 38 vorhanden, welches in einer waagerechten Querebene 37 in der Höhe H der Standard-Kupplung 17 den Winkel α zwischen einer Deichsel 51 eines Anhängers oder Anbaugeräts und einer durch eine Mittellängsachse des Traktors in Höhe H in X-Richtung verlaufenden Geraden misst. Außerdem ist ein weiteres Sensorelement 39 zum Messen eines Winkels β nach vertikal oben oder unten zwischen der Deichsel 51 eines Anhängers oder Anbaugeräts und einer waagerechten Querebene in der Höhe H in X-Richtung vorhanden.

Die genannten Sensorelemente 16, 38, 39 sind ebenfalls drahtlos oder über die dargestellten, aber nicht weiter bezeichneten Kabel mit dem Auswertegerät 40 verbunden. Daher kann das Auswertegerät 40 mittels bekannter Algorithmen sowohl die auf die Messeinrichtung 20 einwirkenden Kräfte Fx, Fy, Fz als auch die entsprechenden Momente Mx, My, Mz aus den Signalen der Sensorelemente 16, 22, 38, 39 nach Größe und Richtung berechnen sowie an ein Fahrzustand-Managementsystem weiterleiten. Dieses Fahrzustand-Managementsystem kann aus den Signalen der Sensorelemente 16, 22, 38, 39 instabile Fahrsituationen ableitend erkennen und Gegensteuermaßnahmen einleiten. Ebenso ist es möglich, aus den Signalen der Sensorelemente 16, 22, 38, 39 eine Abstimmung der Bremswirkung des Traktors 1 und des Anhängers oder des Anbaugeräts vorzunehmen. Das Fahrzustand-Managementsystem ist beispielswiese als ein Computerprogramm ausgebildet und in einem gesonderten Mikrocomputer oder in dem Auswertegerät 40 als Software abgespeichert.

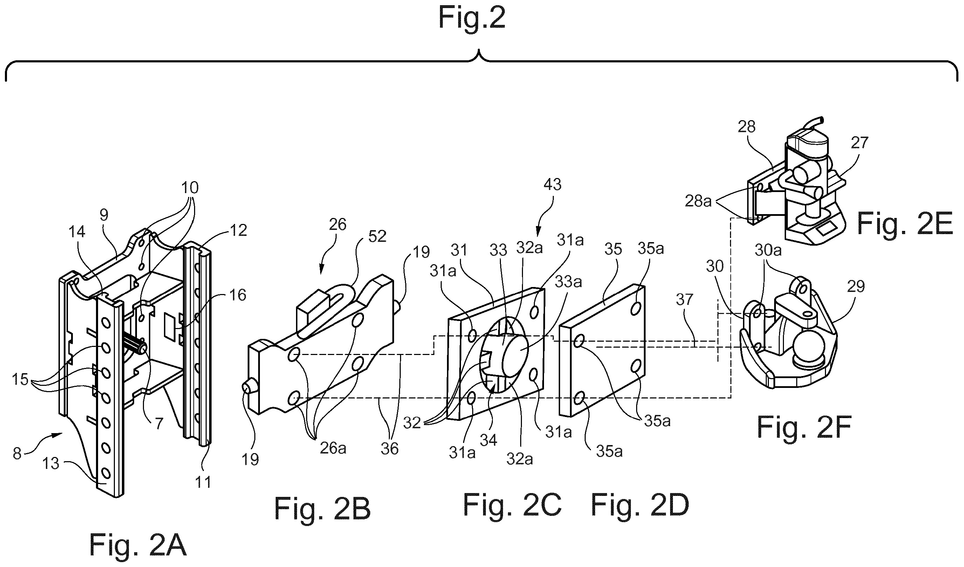

Die Messeinrichtung 42 lässt sich als Modulpaket sowohl zwischen dem Traktor 1 und dem Standard-Anhängebock 8 montieren als auch mit dem als Messplatte ausgebildeten Träger 20 in die Rastnuten 12, 14 des Standard-Anhängebocks 8 einschieben und darin in der erwähnten Höhe H fixieren, wobei eine Standard-Anhängevorrichtung 27 in Form einer Maulkupplung gemäß Fig. 2E mit ihrer Anschraubplatte 28 dann an dem Träger 20 verschraubt ist. Hierzu weist die Anschraubplatte 28 der Standard-Anhängevorrichtung 27 ein kongruentes Standard-Lochschema 28a auf wie der Träger 20.

Eine in Fig. 1C sichtbare Zapfwelle 7 lässt sich für den Antrieb von Nebenaggregaten nur dann benutzen, wenn diese nicht durch die Messeinrichtung 42 versperrt ist. Gegebenenfalls weist der messplattenförmige Träger 20 eine Durchführungsöffnung für die Zapfwelle 7 auf.

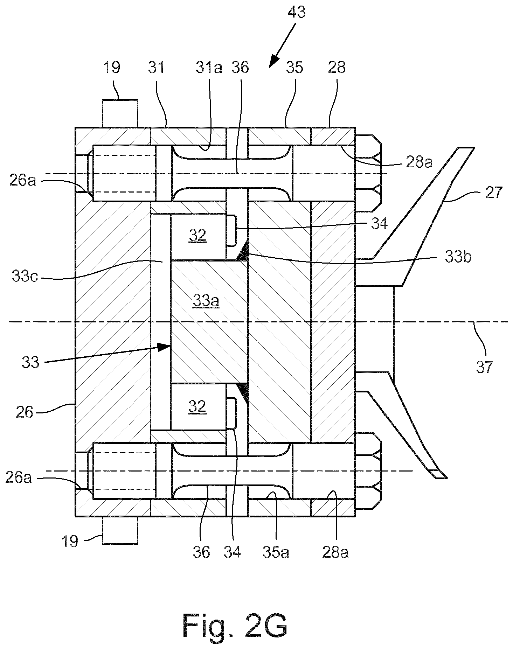

Eine zweite Ausführungsform einer erfindungsgemäßen Messeinrichtung 43 ist in Fig. 2 dargestellt, deren Fig. 2A den kastenförmigen Standard-Anhängebock 8 zeigt, welcher auch in Fig. 1C dargestellt ist. Diese Messeinrichtung 43 weist einen Träger 31 in Form einer Messplatte mit einem Standard-Lochschema 31a auf, das zu einem Standard-Lochschema 26a von Gewindebohrungen in einem Standard-Kupplungsträger 26 kongruent ist. Der Standard-Kupplungsträger 26 lässt sich wie bereits beschrieben in die Rastnuten 12, 14 des Standard-Anhängebocks 8 einschieben und mittels Verriegelungsmittel 19 in Form der Rastzapfen am Standard-Kupplungsträger 26 in den Bohrungen 15 des Standard-Anhängebocks 8 fixieren.

Wie Fig. 2C erkennen lässt, weist der Träger 31 in Form einer Messplatte vorzugsweise einstückig an diesem ausgebildete radiale Speichen 32 auf, die in einer Ebene unter einem Winkel von 90° zueinander angeordnet sind. Zwischen den radialen Speichen 32 und dem Träger 31 sind somit Freiräume 32a ausgebildet, um es den radialen Speichen 32 zu erlauben, sich in Richtung der waagerechten Querebene 37 zu verformen.

Die Speichen 32 sind radial innen mit einer zentralen zylindrischen Nabe 33 verbunden, deren axial vorstehender Bereich 33a vorzugsweise mittels einer Schweißnaht 33b mit einer Adapterplatte 35 stoffschlüssig verbunden ist. Der Träger 31 in Form einer Messplatte weist wie erwähnt ein zu dem Standard-Lochbild 26a am Standard-Kupplungsträger 26 kongruentes Standard-Lochschema 31a auf. Ein ebensolches Standard-Lochschema 35a weist auch die Adapterplatte 35 auf.

An den radialen Speichen 32 sind Sensorelemente 34 in Form von Wägezellen, Dehnungsmessstreifen oder SAW-Elementen als Kraftsensoren angebracht, die in der in Fig. 1 dargestellten Weise mit dem Auswertegerät 40 drahtlos oder über Kabel verbunden sind. Die funktechnische Übertragung der ermittelten Messwerte der Sensorelemente 34 kann auch über einen diesbezüglichen Sender erfolgen, welcher mit einer Antenne 52 verbunden ist, die an der Oberseite des Standard-Kupplungsträgers 26 angeordnet ist.

Der Träger 31 in Form einer Messplatte ist zusammen mit der Adapterplatte 35, mit welcher der axial vorstehender Bereich 33a der zentralen, zylindrischen Nabe 33 form- oder stoffschlüssig gekoppelt ist, zwischen einer Anschraubplatte 28 an einer Standard-Maulkupplung 27 oder einer Anschraubplatte 30 an einer Standard-Kugelkopfkupplung 29 und einem Standard-Kupplungsträger 26 mit Vorspannung der Speichen 32 eingespannt.

Die Vorspannung der Speichen 32 wird mittels zwischen der Anschraubplatte 28, 30 einer Standard-Anhängekupplung 27, 29 und dem Standard-Kupplungsträger 26 angeordneten Dehnschrauben 36 aufgebracht. Die Anschraubplatten 28, 30 der Standard-Anhängekupplung 27 und der Standard-Kugelkopfkupplung 29 weisen hierzu jeweils ein kongruentes Standard-Lochschema 28a, 30a zum Durchführen von Dehnschrauben 36 auf.

Wie Fig. 2G zeigt, sind in dem Träger 33 in Form einer Messplatte die Speichen 32 freigebende und deren Verformung beim Aufbringen der Vorspannung mittels der Dehnschrauben 36 ermöglichende Ausnehmung beziehungsweise Freiräume 33c ausgebildet. Hierdurch kann eine Verformung der Speichen 32 in Richtung des Standard-Kupplungsträgers 26 durch eine auf die Standard-Anhängekupplung 27 wirkende Druckkraft hervorgerufen werden, so dass diese und die von den Dehnschrauben 36 aufgebrachte Vorspannung mittels der Sensorelemente 34 messbar ist.

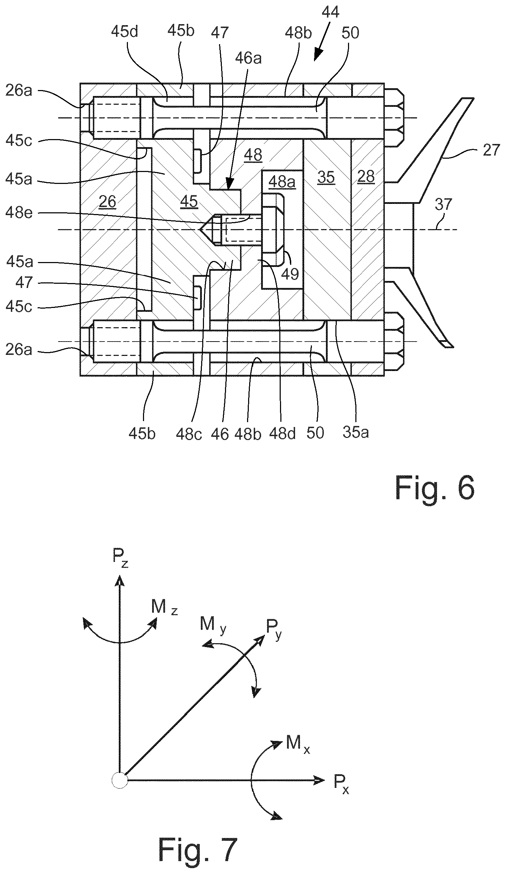

Umgekehrt wird durch eine auf die Standard-Anhängekupplung 27 aufgebrachte Zugkraft eine Bewegung der Adapterplatte 35 und damit der zentralen, zylindrischen Nabe 33 hervorgerufen. Dies bewirkt eine entsprechende Entspannung der radialen Speichen 32, die ebenfalls mittels der Sensorelemente 34 erfassbar ist und aufgrund der um 90° versetzten Anordnung der vier radialen Speichen 32 Signale ergibt, welche zusammen betrachtet durch einen entsprechenden Algorithmus des Auswertegeräts 40 Werte für die aufgebrachten Kräfte Fx, Fx, Fz in X-, Y-, Z-Richtung sowie die entsprechenden Momente Mx, My, Mz ergibt, wie dies in Fig. 7 dargestellt ist.

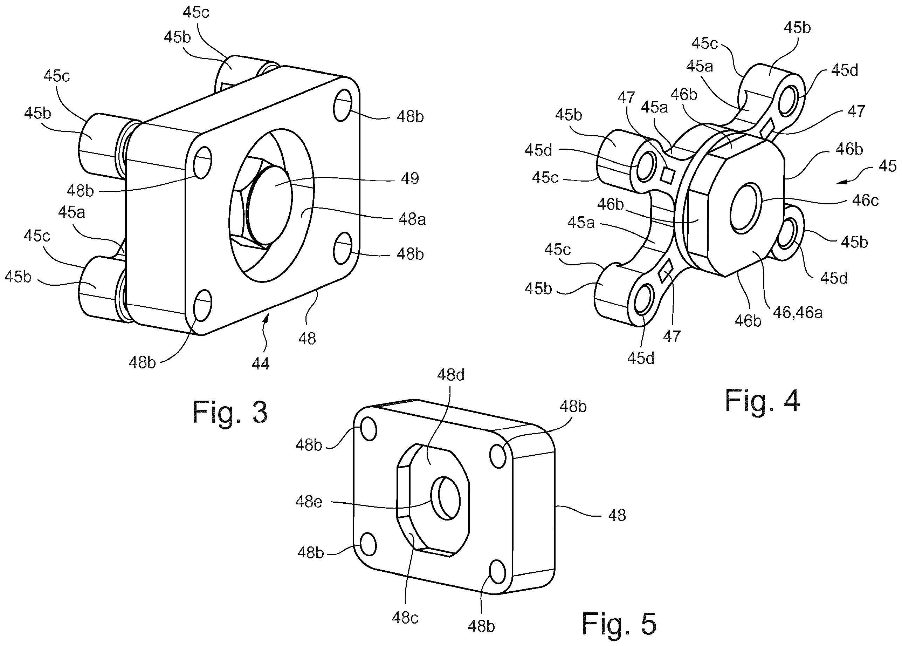

Die in den Figuren 3 bis 6 dargestellte dritte Ausführungsvariante der Messeinrichtung 44 weist einen Träger 45 in Form eines Messkreuzes mit je zwei um 60° beziehungsweise 120° zueinander beabstandete Messarme 45a auf, deren freie Enden Augen 45b mit Durchgangsbohrungen 45d aufweisen, und die an den freien Enden mit Vorsprüngen 45c versehen sind, deren Funktion im Zusammenhang mit Fig. 6 erläutert wird. Der Träger 45 in Form eines Messkreuzes ist mit einer zentralen Nabe 46 versehen, die im Wesentlichen zylindrisch ausgebildet ist, jedoch an einem einseitig axial vorstehenden Bereich 46a mit Anflächungen 46b versehen ist. Dieser axial vorstehende Bereich 46a mit seinen Anflächungen 46b lässt sich in eine zur Nabe 46 komplementäre, unrunde Vertiefung 48c in einer Basisplatte 48 einfügen, wodurch der Träger 45 in Form eines Messkreuzes gegenüber der Basisplatte 48 gegen ein Verdrehen gesichert ist. Die unrunde Vertiefung 48c der Basisplatte 48 endet axial an einem Wandelement 48d mit einer zentralen Durchgangsbohrung 48e für eine in Fig. 3 dargestellte Befestigungsschraube 49, die in eine Gewindebohrung 46c in der zentralen Nabe 46 des Trägers 45 in Form eines Messkreuzes eingeschraubt ist.

Auf ihrer messkreuzfernen Rückseite weist die Basisplatte 48 eine zylindrische Vertiefung 48b auf, in welche der Kopf der Befestigungsschraube 49 versenkbar ist. Au-ßerdem zeigen die Figuren 3 und 5 deutlich, dass die Basisplatte 48 vier Durchgangsbohrungen 48b zur Durchführung der bereits erwähnten Dehnschrauben 50 aufweist, welche auch durch die Durchgangsbohrungen 45d des Trägers 45 hindurchgeführt und letztlich in den Gewindebohrungen 26a des Standard-Kupplungsträgers 26 eingeschraubt sind, welches in Fig. 6 gut erkennbar ist.

Zwischen den Augen 45b an den Enden der vier Messarme 45a und der zentralen Nabe 46 des Trägers 45 sind an den Messarmen 45a jeweils Sensorelemente 47 in Form von Wägezellen, Dehnungsmessstreifen oder SAW-Elementen als Kraftsensoren angeordnet sowie entsprechend Fig. 1 drahtlos oder über Kabel, wie auch die anderen Sensorelemente, mit dem Auswertegerät 40 verbunden.

Auch die Messeinrichtung 44 gemäß den Figuren 3 bis 6 ist als Modulpaket aus der Anschraubplatte 28, 30 der Standard-Anhängevorrichtung 27, 29, der Adapterplatte 35, der Basisplatte 48, dem Träger 45 in Form eines Messkreuzes und dem Standard-Kupplungsträger 26, die mittels der Dehnschrauben 50 gegeneinander verspannt sind, an einem am motorisierten Fahrzeug 1 befestigten Standard-Anhängebock 8 höhenverstellbar anbringbar.

### Bezugszeichenliste (Teil der Beschreibung)

- 1: Motorisiertes Fahrzeug (Traktor)
- 2: Hinterrad
- 3: Raddrehachse
- 4: Niveau des Erdbodens
- 5: Radaufstandspunkt
- 6: Anschraubaufnahme (Befestigungsplatte am Traktor)
- 7: Zapfwelle
- 8: Standard-Anhängebock, kastenförmig
- 9: Traktorbefestigungsplatte am Anhängebock
- 10: Bohrungsschema am Standard-Anhängebock
- 11: Erste Rastschiene am Standard-Anhängebock
- 12: Erste Rastnut
- 13: Zweite Rastschiene am Standard-Anhängebock
- 14: Zweite Rastnut
- 15: Bohrungen für Verriegelungsmittel in Rastschiene
- 16: Sensorelement zum Erkennen der Kupplungshöhe H
- 17: Standard-Maulkupplung
- 18: Rastplatte an der Maulkupplung
- 19: Verriegelungsmittel (Rastzapfen)
- 20: Träger in Form einer Messplatte
- 21: Befestigungsschienen
- 22: Sensorelemente
- 22a: Freistehende Zungen der Sensorelemente 22
- 23: Befestigungsschrauben
- 24: Versenkte Befestigungsschrauben
- 25: Befestigungsschrauben
- 26: Standard-Kupplungsträger mit Verriegelungsmitteln
- 26a: Standard-Lochschema von Gewindebohrungen am Kupplungsträger 26
- 27: Standard-Maulkupplung
- 28: Standard-Anschraubplatte an Maulkupplung 27
- 28a: Standard-Lochschema von Durchgangsbohrungen in Anschraubplatte 28
- 29: Standard-Kugelkopfkupplung
- 30: Standard-Anschraubplatte an Kugelkopfkupplung 29
- 30a: Standard-Lochschema von Durchgangsbohrungen der Anschraubplatte 30
- 31: Träger in Form einer Messplatte
- 31a: Standard-Lochschema von Durchgangsbohrungen im Träger 31
- 32: Radiale Speichen an Träger 31
- 32a: Freiraum zwischen Speichen 32
- 33: Zentrale, zylindrische Nabe an Träger 31
- 33a: Axial vorstehender Bereich der Nabe 33
- 33b: Schweißnaht
- 33c: Ausnehmung im Träger 31
- 34: Sensorelemente an den Speichen
- 35: Adapterplatte
- 35a: Standard-Lochschema von Durchgangsbohrungen in Adapterplatte 35
- 36: Dehnschrauben
- 37: Waagerechte Querebene durch eine Längsachse des Traktors in Höhe H der Standard-Kupplung 17, in Richtung X-Achse
- 38: Sensorelement zur Messung von Winkel α
- 39: Sensorelement zur Messung von Winkel β
- 40: Auswertegerät
- 42: Erste Ausführungsform einer Messeinrichtung
- 43: Zweite Ausführungsform einer Messeinrichtung
- 44: Dritte Ausführungsform einer Messeinrichtung
- 45: Träger in Form eines Messkreuzes
- 45a: Messarme am Träger 45
- 45b: Augen an den Messarmen 45a
- 45c: Vorsprünge an den Augen 45b
- 45d: Durchgangsbohrungen in den Augen 45b
- 46: Zentrale Nabe des Trägers 45
- 46a: Einseitig axial vorstehender Bereich der Nabe 46
- 46b: Anflächungen an der Nabe 46
- 46c: Gewindebohrung in der Nabe 46
- 47: Sensorelemente an den Messarmen 45a
- 48: Basisplatte
- 48a: Zylindrische Vertiefung in der Basisplatte 48
- 48b: Durchgangsbohrungen in der Basisplatte 48
- 48c: Unrunde Vertiefung in der Basisplatte 48
- 48d: Wandelement der Basisplatte 48
- 48e: Zentrale Bohrung in der Basisplatte 48
- 49: Befestigungsschraube
- 50: Dehnschrauben
- 51: Deichsel des Anhängers oder des Anhängegeräts
- 52: Antenne
- H: Abstand einer Standard-Anhängekupplung am Traktor vom Niveau des Erdbodens
- X, Y, Z: Koordinatenachsen
- α: Winkel zwischen einer Deichsel eines Anhängers oder Anbaugeräts und einer durch eine Mittellängsachse des Traktors in Höhe H in X-Richtung verlaufenden Geraden
- β: Winkel nach oben oder unten zwischen einer Deichsel eines Anhängers oder Anbaugeräts und einer waagerechten Querebene in Höhe H in X-Richtung

## Patentansprüche

1. Messeinrichtung (42, 43, 44) zum Messen von Kräften und/oder Momenten zwischen einem motorisierten Fahrzeug (1) und einem davon gezogenen oder geschobenen Anhänger oder Anbaugerät,
wobei die Messeinrichtung (42, 43, 44) wenigstens drei an einem Träger (20, 31, 45) quer zu einer gedachten Längsachse des motorisierten Fahrzeugs (1) sowie zueinander beabstandet angeordnete Sensorelemente (22, 34, 47) aufweist,
wobei die Messeinrichtung (42, 43, 44) in einem Kupplungsbereich zwischen dem motorisierten Fahrzeug (1) und dem gezogenen oder geschobenen Anhänger oder Anbaugerät angeordnet ist,
und wobei die Sensorelemente (22, 34, 47) zur Übertragung derer Messwerte mit einem Auswertegerät (40) verbunden sind,
welches dazu eingerichtet ist, diese Messwerte in Signale für Kraftanzeigen und/oder Momentenanzeigen nach Größe und Richtung umzuwandeln, **dadurch gekennzeichnet,**
**dass** die Messeinrichtung (42, 43, 44) als Modulpaket an einem Standard-Anhängebock (8) am motorisierten Fahrzeug (1) montiert ist
sowie mittels eines am Standard-Anhängebock (8) angeordneten Kupplungsträgers (26) mit einer Standard-Anhängevorrichtung (17, 27, 29), wie eine Standard-Maulkupplung (17, 27) oder eine Standard-Kugelkopfkupplung (29), verschraubt ist.

2. Messeinrichtung (42, 43, 44) zum Messen von Kräften und/oder Momenten zwischen einem motorisierten Fahrzeug (1) und einem davon gezogenen oder geschobenen Anhänger oder Anbaugerät,
wobei die Messeinrichtung (42, 43, 44) wenigstens drei an einem Träger (20, 31, 45) quer zu einer gedachten Längsachse des motorisierten Fahrzeugs (1) sowie zueinander beabstandet angeordnete Sensorelemente (22, 34, 47) aufweist,
wobei die Messeinrichtung (42, 43, 44) in einem Kupplungsbereich zwischen dem motorisierten Fahrzeug (1) und dem gezogenen oder geschobenen Anhänger oder Anbaugerät angeordnet ist,
und wobei die Sensorelemente (22, 34, 47) zur Übertragung derer Messwerte mit einem Auswertegerät (40) verbunden sind,
welches dazu eingerichtet ist, diese Messwerte in Signale für Kraftanzeigen und/oder Momentenanzeigen nach Größe und Richtung umzuwandeln, **dadurch gekennzeichnet,**
**dass** die Messeinrichtung (42, 43, 44) als Modulpaket zwischen einer Anschraubaufnahme (6) am motorisierten Fahrzeug (1) für einen Standard-Anhängebock (8) und diesem Standard-Anhängebock (8) montiert ist,
und **dass** eine Standard-Anhängevorrichtung (17, 27, 29), wie eine Standard-Maulkupplung (17, 27) oder eine Standard-Kugelkopfkupplung (29), direkt am Standard-Anhängebock (8) befestigt ist.

3. Messeinrichtung (42, 43, 44) nach Anspruch 1 oder 2, **dadurch gekennzeichnet, dass** das Auswertegerät (40) in Datenverbindung mit einem Fahrzustand-Managementsystem ist,
welches dazu eingerichtet ist, aus den Messwerten der Sensorelemente (22, 34, 47) instabile Fahrsituationen zu erkennen und Gegensteuermaßnahmen einzuleiten.

4. Messeinrichtung (42, 43, 44) nach Anspruch 3, **dadurch gekennzeichnet,**
**dass** das Fahrzustand-Managementsystem dazu eingerichtet ist,
aus den Messwerten der Sensorelemente (22, 34,47) Steuersignale für Aktuatoren zur Bewirkung einer Abstimmung der Bremswirkung des motorisierten Fahrzeugs (1) und des Anhängers oder des Anhängegeräts aufeinander zu erzeugen.

5. Messeinrichtung (42, 43, 44) nach Anspruch 2, **dadurch gekennzeichnet,**
**dass** die Standard-Anhängevorrichtung (17, 27, 29) am Standard-Anhängebock (8) lösbar und höhenverstellbar befestigt ist.

6. Messeinrichtung (42, 43, 44) nach Anspruch 1, **dadurch gekennzeichnet,**
**dass** der Kupplungsträger (26) am Standard-Anhängebock (8) lösbar und höhenverstellbar befestigt ist.

7. Messeinrichtung (42) nach einem der Ansprüche 1 bis 6, **dadurch gekennzeichnet, dass** vier Sensorelemente (22) in Form von Wägezellen, Dehnungsmessstreifen oder SAW-Elementen als Kraftsensoren an dem messplattenförmigen Träger (20) beabstandet im Quadrat oder im Rechteck angeordnet sind,
dass die vier Sensorelemente (22) einerseits über den messplattenförmigen Träger (20) an einer Anschraubaufnahme (6) in Form einer Befestigungsplatte am motorisierten Fahrzeug (1) befestigt sind und andererseits mit dem Standard-Anhängebock (8) in Wirkverbindung sind,
um die durch eine Beanspruchung des Standard-Anhängebocks (8) durch die Last des gezogenen oder geschobenen Anhängers oder des Anbaugeräts für das Auswertegerät (40) bestimmte Signale zu generieren.

8. Messeinrichtung (43) nach einem der Ansprüche 1 bis 6, **dadurch gekennzeichnet, dass** vier Sensorelemente (34) in Form von Wägezellen, Dehnungsmessstreifen oder SAW-Elementen als Kraftsensoren an vier um etwa 90° gegeneinander versetzten, sich radial von einer zentralen, zylindrischen Nabe (33) erstreckenden Speichen (32) angeordnet sind,
dass die Speichen (32) kraft-, form- oder stoffschlüssig mit einem Träger (31) in Form einer Messplatte gekoppelt sind,
wobei dieser Träger (31) in Form einer Messplatte (31) zusammen mit einer Adapterplatte (35), mit welcher die zentrale, zylindrische Nabe (33) form- oder stoffschlüssig gekoppelt ist,
zwischen einer Anschraubplatte (28, 30) einer Standard-Anhängekupplung (27, 29) und einem Standard-Kupplungsträger (26) eingespannt ist.

9. Messeinrichtung (43) nach Anspruch 8, **dadurch gekennzeichnet,**
**dass** eine Vorspannung auf die Speichen (32) über einen axial vorstehenden Bereich (33a) der zylindrischen Nabe (33) mittels zwischen der Anschraubplatte (28, 30) einer Standard-Anhängekupplung (27, 29) und dem Standard-Kupplungsträger (26) angeordneten Dehnschrauben (36) aufgebracht wird.

10. Messeinrichtung (43) nach Anspruch 8 oder 9, **dadurch gekennzeichnet,**
**dass** in dem Träger (31) in Form einer Messplatte eine dem Standard-Kupplungsträger (26) zugewandte, die Speichen (32) frei gebende und deren Verformung beim Aufbringen der Vorspannung mittels der Dehnschrauben (36) ermöglichende Ausnehmung (33b) ausgebildet ist.

11. Messeinrichtung (43) nach einem der Ansprüche 8 bis 10, **dadurch gekennzeichnet,**
**dass** die Messeinrichtung (43) als Modulpaket, bestehend aus der Anschraubplatte (28, 30) der Standard-Anhängevorrichtung (27, 29), der Adapterplatte (35), dem Träger (31) in Form der Messplatte und dem Standard-Kupplungsträger (26), die mittels der Dehnschrauben (36) gegeneinander verspannt sind, an einem am motorisierten Fahrzeug (1) befestigten Standard-Anhängebock (8) höhenverstellbar anbringbar ausgebildet ist.

## Claims

1. A measuring device (42, 43, 44) for measuring force and/or moments between a motorized vehicle (1) and a trailer or attachment pulled or pushed therefrom, wherein the measuring device (42, 43, 44) has at least three sensor elements (22, 34, 47) arranged on a carrier (20, 31, 45) perpendicular to an imaginary longitudinal axis of the motorized vehicle (1) as well as spaced apart from one another, wherein the measuring device (42, 43, 44) is arranged in a coupling region between the motorized vehicle (1) and the pulled or pushed trailer or attachment, and wherein the sensor elements (22, 34, 47) are connected to an evaluation device (40) for transmission of their measurement values, which is set up to convert these measurement values into signals for indicating force and/or moment according to size and direction, **characterized in that** the measuring device (42, 43, 44) is mounted as a module package on a standard towing bracket (8) on the motorized vehicle (1) and is screwed by means of a coupling carrier (26) arranged on the standard towing bracket (8) to a standard trailer device (17, 27, 29), like a standard mouth type coupling (17, 27) or a standard ball head coupling (29).

2. A measuring device (42, 43, 44) for measuring force and/or moments between a motorized vehicle (1) and a trailer or attachment pulled or pushed therefrom, wherein the measuring device (42, 43, 44) has at least three sensor elements (22, 34, 47) arranged on a carrier (20, 31, 45) perpendicular to an imaginary longitudinal axis of the motorized vehicle (1) as well as spaced apart from one another, wherein the measuring device (42, 43, 44) is arranged in a coupling region between the motorized vehicle (1) and the pulled or pushed trailer or attachment, and wherein the sensor elements (22, 34, 47) are connected to an evaluation device (40) for transmission of their measurement values, which is set up to convert these measurement values into signals for indicating force and/or moment according to size and direction, **characterized in that** the measuring device (42, 43, 44) is mounted as a module package between a screw-on mounting (6) on the motorized vehicle (1) for a standard towing bracket (8) and this standard towing bracket (8), and that a standard trailer device (17, 27, 29), like a standard-mouth type coupling (17, 27) or a standard ball head coupling (29) is directly fastened to the standard towing bracket (8).

3. The measuring device (42, 43, 44) according to claim 1 or 2, **characterized in that** the evaluation device (40) is in data connection with a driving status management system, which is set up to detect unstable driving situations from the measurement values of the sensor elements (22, 34, 47) and to initiate countermeasures.

4. The measuring device (42, 43, 44) according to claim 3, **characterized in that** the driving status management system is set up to generate control signals for actuators to effect a coordination of the braking effect of the motorized vehicle (1) and of the trailer or of the trailer device to one another from the measurement values of the sensor elements (22, 34, 47) .

5. The measuring device (42, 43, 44) according to claim 2, **characterized in that** the standard trailer device (17, 27, 29) is detachably and height-adjustably fastened on the standard towing bracket (8).

6. The measuring device (42, 43, 44) according to claim 1, **characterized in that** the coupling carrier (26) is detachably and height-adjustably fastened on the standard towing bracket (8).

7. The measuring device (42) according to any of claims 1 to 6, **characterized in that** four sensor elements (22) in the form of weighing cells, strain gauges or SAW elements are arranged as force sensors on the measuring plate shaped carrier (20) spaced apart in the square or in the rectangle, **in that** the four sensor elements (22) are fastened on one side via the measuring plate shaped carrier (20) on a screw-on mounting (6) in the form of a mounting plate on the motorized vehicle (1) and on the other side are in operative connection with the standard towing bracket (8), in order by means of a load of the standard towing bracket (8) to generate signals intended for the evaluation device (40) by the load of the pulled or pushed trailer or of the attachment.

8. The measuring device (43) according to any of claims 1 to 6, **characterized in that** the four sensor elements (34) in the form of weighing cells, strain gauges or SAW elements are arranged as force sensors on four spokes (32) offset by approximately 90° to one another extending radially from a central, cylindrical hub (33), **in that** the spokes (32) are non-positively, positively or cohesively coupled to a carrier (31) in the form of a measuring plate, wherein this carrier (31) in the form of a measuring plate (31) is coupled together with an adapter plate (35), to which the central, cylindrical hub (33) is positively or cohesively coupled, between a screw-on plate (28, 30) of a standard trailer coupling (27, 29) and a standard coupling carrier (26).

9. The measuring device (43) according to claim 8, **characterized in that** a preload is applied to the spokes (32) over an axially protruding region (33a) of the cylindrical hub (33) by means of expansion screws (36) arranged between the screw-on plate (28, 30) of a standard trailer coupling (27, 29) and the standard coupling carrier (26).

10. The measuring device (43) according to claim 8 or 9, **characterized in that** a recess (33b) is embodied in the carrier (31) in the form of a measuring plate facing the standard coupling carrier (26), releasing the spokes (32) and making possible their deformation upon application of the preload by means of the expansion screws (36).

11. The measuring device (43) according to any of claims 8 to 10, **characterized in that** the measuring device (43) is embodied as a module package, consisting of the screw-on plate (28, 30) of the standard trailer device trailer device (27, 29), the adapter plate (35), the carrier (31) in the form of the measuring plate and the standard coupling carrier (26), which are clamped against each other by means of the expansion screws (36), height-adjustably mountable on a standard towing bracket (8) fastened on the motorized vehicle (1).

## Revendications

1. Dispositif de mesure (42, 43, 44) pour mesurer des forces et/ou couples entre un véhicule motorisé (1) et une remorque ou un accessoire tiré(e) ou poussé(e) par celui-ci,
dans lequel le dispositif de mesure (42, 43, 44) présente au moins trois éléments capteurs (22, 34, 47) disposés sur un support (20, 31, 45) transversalement par rapport à un axe longitudinal imaginaire du véhicule motorisé (1) ainsi que de manière espacée les uns des autres,
dans lequel le dispositif de mesure (42, 43, 44) est disposé dans une zone d'attelage entre le véhicule motorisé (1) et la remorque ou l'accessoire tiré(e) ou poussé(e),
et dans lequel les éléments capteurs (22, 34, 47) pour la transmission de leurs valeurs de mesure sont reliés à un appareil d'évaluation (40),
lequel est conçu pour convertir ces valeurs de mesure en signaux pour des indications de force et/ou indications de couple en fonction de la grandeur et de la direction, **caractérisé en ce**
**que** le dispositif de mesure (42, 43, 44) est monté sous la forme d'un paquet modulaire sur un bâti de remorque standard (8) sur le véhicule motorisé (1) et est vissé au moyen d'un support d'attelage (26) disposé sur le bâti de remorque standard (8) à un dispositif de remorque standard (17, 27, 29), tel qu'un attelage à mâchoire standard (17, 27) ou un attelage à tête sphérique standard (29).

2. Dispositif de mesure (42, 43, 44) pour mesurer des forces et/ou couples entre un véhicule motorisé (1) et une remorque ou un accessoire tiré(e) ou poussé(e) par celui-ci,
dans lequel le dispositif de mesure (42, 43, 44) présente au moins trois éléments capteurs (22, 34, 47) disposés sur un support (20, 31, 45) transversalement par rapport à un axe longitudinal imaginaire du véhicule motorisé (1) ainsi que de manière espacée les uns des autres,
dans lequel le dispositif de mesure (42, 43, 44) est disposé dans une zone d'attelage entre le véhicule motorisé (1) et la remorque ou l'accessoire tiré(e) ou poussé(e),
et dans lequel les éléments capteurs (22, 34, 47) pour la transmission de leurs valeurs de mesure sont reliés à un appareil d'évaluation (40),
lequel est conçu pour convertir ces valeurs de mesure en signaux pour des indications de force et/ou indications de couple en fonction de la grandeur et de la direction, **caractérisé en ce**
**que** le dispositif de mesure (42, 43, 44) est monté en tant que paquet modulaire entre un logement vissable (6) sur le véhicule motorisé (1) pour un bâti de remorque standard (8) et ce bâti de remorque standard (8),
et **qu'**un dispositif de remorque standard (17, 27, 29), tel qu'un attelage à mâchoire standard (17, 27) ou un attelage à tête sphérique standard (29), est fixé directement sur le bâti de remorque standard (8).

3. Dispositif de mesure (42, 43, 44) selon la revendication 1 ou 2, **caractérisé en ce**
**que** l'appareil d'évaluation (40) est en liaison de données avec un système de gestion d'état de conduite,
lequel est conçu pour reconnaître des situations de conduite instables à partir des valeurs de mesure des éléments capteurs (22, 34, 47) et pour prendre des mesures de commande complémentaires.

4. Dispositif de mesure (42, 43, 44) selon la revendication 3, **caractérisé en ce**
**que** le système de gestion d'état de conduite est conçu pour produire à partir des valeurs de mesure des éléments capteurs (22, 34, 47) des signaux de commande pour des actionneurs pour la réalisation d'une adaptation de l'effet de freinage du véhicule motorisé (1) et de la remorque ou de l'outil accroché les uns aux autres.

5. Dispositif de mesure (42, 43, 44) selon la revendication 2, **caractérisé en ce**
**que** le dispositif de remorque standard (17, 27, 29) est fixé sur le bâti de remorque standard (8) de manière détachable et réglable en hauteur.

6. Dispositif de mesure (42, 43, 44) selon la revendication 1, **caractérisé en ce**
**que** le support d'attelage (26) est fixé sur le bâti de remorque standard (8) de manière détachable et réglable en hauteur.

7. Dispositif de mesure (42) selon l'une quelconque des revendications 1 à 6, **caractérisé en ce**
**que** quatre éléments capteurs (22) sous forme de cellules de pesée, jauges de contrainte ou éléments à ondes acoustiques de surface en tant que capteurs de force sont disposés de manière espacée en carré ou en rectangle sur le support (20) en forme de plaque de mesure,
**que** les quatre éléments capteurs (22) sont fixés d'une part par l'intermédiaire du support (20) en forme de plaque de mesure sur un logement vissable (6) sous forme d'une plaque de fixation sur le véhicule motorisé (1) et d'autre part sont en liaison fonctionnelle avec le bâti de remorque standard (8),
afin de générer les signaux déterminés par une sollicitation du bâti de remorque standard (8) par la charge de la remorque ou de l'accessoire tiré(e) ou poussé(e) pour l'appareil d'évaluation (40).

8. Dispositif de mesure (43) selon l'une quelconque des revendications 1 à 6, **caractérisé en ce**
**que** quatre éléments capteurs (34) sous forme de cellules de pesée, jauges de contrainte ou éléments à ondes acoustiques de surface en tant que capteurs de force sont disposés sur quatre rayons (32) décalés les uns des autres de sensiblement 90°, s'étendant radialement à partir d'un moyeu cylindrique (33) central,
**que** les rayons (32) sont accouplés à force, par coopération de formes ou par liaison de matière à un support (31) sous forme d'une plaque de mesure,
dans lequel ce support (31) sous forme d'une plaque de mesure (31) conjointement avec une plaque d'adaptation (35), avec laquelle le moyeu cylindrique (33) central est accouplé par coopération de formes ou liaison de matière, est serré entre une plaque vissable (28, 30) d'un attelage de remorque standard (27, 29) et un support d'attelage standard (26).

9. Dispositif de mesure (43) selon la revendication 8, **caractérisé en ce**
**qu'**une précontrainte est appliquée sur les rayons (32) par l'intermédiaire d'une zone (33a) axialement en saillie du moyeu cylindrique (33) au moyen de vis de traction (36) disposées entre la plaque vissable (28, 30) d'un attelage de remorque standard (27, 29) et le support d'attelage standard (26) .

10. Dispositif de mesure (43) selon la revendication 8 ou 9, **caractérisé en ce**
**qu'**un évidement (33b) tourné vers le support d'attelage standard (26), libérant les rayons (32) et permettant leur déformation lors de l'application de la précontrainte au moyen des vis de traction (36), est réalisé dans le support (31) sous forme d'une plaque de mesure.

11. Dispositif de mesure (43) selon l'une quelconque des revendications 8 à 10, **caractérisé en ce**
**que** le dispositif de mesure (43) est réalisé sous la forme d'un paquet modulaire, constitué de la plaque vissable (28, 30) du dispositif de remorque standard (27, 29), de la plaque d'adaptation (35), du support (31) sous forme de la plaque de mesure et du support d'attelage standard (26), qui sont serrés les uns contre les autres au moyen des vis de traction (36), de manière à pouvoir être monté de façon réglable en hauteur sur un bâti de remorque standard (8) fixé sur le véhicule motorisé (1).
